(19) Europäisches Patentamt

European Patent Office

Office européen des brevets

(11) **EP 1 189 490 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(51) Int Cl.:
***H05B 41/38*** *(2006.01)*        ***H05B 41/36*** *(2006.01)*

(21) Anmeldenummer: **01122013.4**

(22) Anmeldetag: **13.09.2001**

(54) **Elektronisches Vorschaltgerät**

Electronic ballast for fluorescent lamp

Ballast électronique de lampe fluorescente

(84) Benannte Vertragsstaaten:
**AT BE CH CY DE DK ES FI FR GB GR IE IT LI LU MC NL PT SE TR**

(30) Priorität: **15.09.2000 DE 10045713**

(43) Veröffentlichungstag der Anmeldung:
**20.03.2002 Patentblatt 2002/12**

(73) Patentinhaber: **TridonicAtco GmbH & Co. KG 6851 Dornbirn (AT)**

(72) Erfinder:
• **Zudrell-Koch, Stefan, Dipl.-Ing. (FH) 6850 Dornbirn (AT)**

• **Marent, Günter, Dipl.-Ing. (FH) 6850 Dornbirn (AT)**

(74) Vertreter: **Rupp, Christian et al Mitscherlich & Partner, Patent- und Rechtsanwälte, Postfach 33 06 09 80066 München (DE)**

(56) Entgegenhaltungen:
**US-A- 5 680 015        US-A- 5 705 896
US-A- 5 990 634**

## Beschreibung

Die vorliegende Erfindung betrifft ein elektronisches Vorschaltgerät nach dem Oberbegriff des Anspruches 1.

Der Einsatz elektronischer Vorschaltgeräte zum Betreiben von Gasentladungslampen, insbesondere von Leuchtstofflampen, ist gegenüber der Verwendung von konventionellen Vorschaltgeräten mit einem höheren Investitionsaufwand verbunden, führt allerdings aufgrund von reduzierten Vorschaltgeräteverlusten sowie einem verbesserten Lampenwirkungsgrad zu deutlichen Energieeinsparungen. Den Eingang eines elektronischen Vorschaltgeräts bildet üblicherweise ein an das Spannungsversorgungsnetz angeschlossenes Hochfrequenzfilter, welches mit einer Gleichrichterschaltung verbunden ist. Die von der Gleichrichterschaltung gleichgerichtete Versorgungsspannung wird einer Glättungsschaltung zum Erzeugen einer Zwischenkreisspannung zugeführt. Ein mit der Zwischenkreisspannung gespeister Wechselrichter erzeugt schließlich eine hochfrequente Wechselspannung, welche an den Lastkreis mit der darin angeordneten Gasentladungslampe angelegt wird. Das Betreiben mit der hochfrequenten Wechselspannung hat unter anderem eine Steigerung der Lichtausbeute in der positiven Säule der Lampe zur Folge. Durch eine Änderung der Frequenz ist darüber hinaus die Möglichkeit gegeben, die Lampe in unterschiedlichen Helligkeitsstufen zu betreiben.

Die vorliegende Erfindung befaßt sich mit der Glättungsschaltung, welche die dem Wechselrichter zugeführte Zwischenkreisspannung bereitstellt. Üblicherweise wird dabei die Zwischenkreisspannung auf einen vorgegebenen Sollwert geregelt, was durch eine innerhalb der Glättungsschaltung angeordnete Regelschaltung erfolgt. Diese vergleicht den aktuellen Wert der Zwischenkreisspannung als Istwert mit einem intern vorgegebenen Sollwert und steuert dementsprechend die Energieaufnahme des Vorschaltgeräts und damit den Wert der Zwischenkreisspannung. Eine Steuerung der Energieaufnahme erfolgt dabei üblicherweise mit Hilfe eines steuerbaren Schaltelements.

Die Schaltvorgänge dieses Schaltelements der Glättungsschaltung können allerdings zu Oberwellen führen, welche in das Spannungsversorgungsnetz "zurückstrahlen". Dies bedeutet, daß Spannung und Strom am Eingang des Vorschaltgeräts hinsichtlich ihrer Phase auseinanderlaufen und eine Verzerrung eintritt, die zur Erzeugung von Oberwellen führt, welche vom Netz wahrgenommen werden. Da sich jedoch die Oberwellen im Netz störend auswirken können, verlangt eine entsprechende Norm, daß während eines Normalbetriebs der Gasentladungslampe die von einem elektronischen Vorschaltgerät erzeugten Oberwellen nur unterhalb eines bestimmten Pegels in das Netz "zurückstrahlen". Die Glättungsschaltung sollte daher so ausgelegt werden, daß ein Auseinanderlaufen der Spannung und des Stroms hinsichtlich ihrer Phase möglichst vermieden wird.

Auf der anderen Seite besteht während einer Vorheizphase oder einer Zündphase der Gasentladungslampe das Bedürfnis, den Regler für die Zwischenkreisspannung möglichst dynamisch zu gestalten, damit das Vorschaltgerät in der Lage ist, dem Lastkreis mit der darin angeordneten Lampe möglichst umgehend die benötigte Energie bereitzustellen. Ein schneller Regler führt aber andererseits dazu, daß aufgrund der schnell ablaufenden Schaltvorgänge verstärkt Oberwellen am Eingang des elektronischen Vorschaltgeräts erzeugt werden. Üblicherweise ist somit für die Auslegung des Reglers für die Zwischenkreisspannung ein Kompromiß zu treffen, der sowohl die Bedürfnisse und Beschränkungen während eines Normalbetriebs als auch die Erfordernisse während einer Vorheiz- oder Zündphase berücksichtigt. Ein solcher Kompromiß hat jedoch zwangsläufig zur Folge, daß die Regeleigenschaften über den gesamten Lampenbetrieb hin gesehen nicht optimal sind.

Aus dem US-Patent Nr. 5,680,015 ist ein Vorschaltgerät zum Betreiben einer Hochdruck-Gasentladungslampe bekannt, welches zu Beginn des Lampenbetriebs eine Testphase durchläuft, um einen Frequenzbereich zu ermitteln, in dem die Lampe stabil betrieben werden kann. Innerhalb eines Steuerblocks befinden sich verschiedene Regelschaltungen, wobei eine erste Regelschaltung während einer Anlaufphase die Zwischenkreisspannung auf 440 V begrenzt und anschließend von einer zweiten Regelschaltung abgelöst wird, die im späteren Normalbetrieb die Lampenleistung auf 70 W einstellt. Auf diese Weise wird zwar sichergestellt, daß die Hochdruck-Gasentladungslampe zu jeder Zeit unter geeigneten Betriebsbedingungen betrieben wird, die Verwendung mehrerer unterschiedlicher Regelschaltungen ist allerdings verhältnismäßig aufwendig.

Es ist daher Aufgabe der vorliegenden Erfindung, ein elektronisches Vorschaltgerät zum Betreiben einer Gasentladungslampe anzugeben, welches mit einem geringen Aufwand in sämtlichen Betriebsphasen der Lampe ein optimales Verhalten der Glättungsschaltung zum Erzeugen der Zwischenkreisspannung gewährleistet.

Die Aufgabe wird durch ein elektronisches Vorschaltgerät für mindestens eine Gasentladungslampe, insbesondere für eine Leuchtstofflampe, welches die Merkmale des Anspruchs 1 aufweist, gelöst. Das erfindungsgemäße Vorschaltgerät weist zunächst eine an eine Wechselspannungsquelle anschließbare Gleichrichterschaltung sowie eine an den Ausgang der Gleichrichterschaltung angeschlossene und von einem Zwischenkreisspannungs-Regler gesteuerte Glättungsschaltung zum Erzeugen einer Zwischenkreisspannung auf. Darüber hinaus enthält das Vorschaltgerät einen mit der Zwischenkreisspannung gespeisten Wechselrichter, an dessen Ausgang ein die Lampe enthaltender Lastkreis angeschlossen ist.

Erfindungsgemäß ist der Zwischenkreisspannungs-Regler als Digitalregler ausgestaltet, der anhand von digitalisierten Werten der Zwischenkreisspannung einen Steuerwert zum Ansteuern der Glättungsschaltung berechnet. Dabei werden bei der Berechnung des Steuerwerts Eingangswerte mit Parametern gewichtet und in den unterschiedlichen Betriebsphasen der Lampe unterschiedliche Parametersätze verwendet.

Durch die Verwendung unterschiedlicher Parametersätze wird gewährleistet, daß die Glättungsschaltung in den verschiedenen Betriebsphasen der Lampe jeweils für die entsprechende Betriebsphase optimale Eigenschaften aufweist und dabei die Anforderungen hinsichtlich des Bereitstellens der Zwischenkreisspannung sowie des Erzeugens bzw. Unterdrückens von Oberwellen erfüllt. Im Gegensatz zu bekannten Vorschaltgeräten, bei denen die Dynamik der Regelschaltungen für die Zwischenkreisspannung über den gesamten Betrieb der Lampe hinweg einer Lampe konstant bleibt, wird nunmehr erfindungsgemäß die Regelschaltung hinsichtlich ihrer Dynamik verändert. Es muß somit nicht mehr ein Kompromiß zwischen den unterschiedlichen Anforderungen in den verschiedenen Betriebsphasen gefunden werden, auch der Einsatz unterschiedlicher Regelschaltungen - wie aus der US 5,680,015 bekannt - ist nicht notwendig.

Weiterbildungen der Erfindung sind Gegenstand der Unteransprüche.

So erfolgt die Regelung der Zwischenkreisspannung vorzugsweise mit Hilfe eines die Energieaufnahme des Vorschaltgeräts steuernden Schaltelementes, welches von dem erfindungsgemäßen Zwischenkreisspannungs-Regler angesteuert wird. Bei dem Schaltelement kann es sich beispielsweise um einen Feldeffekttransistor handeln. Zum Bereitstellen der Zwischenkreisspannung können die gängigen Schaltprinzipien für Glättungsschaltungen verwendet werden. Beispielsweise bietet sich hierfür die Verwendung eines Hochsetzstellers bzw. Aufwärtswandlers an. Das von dem Zwischenkreisspannungs-Regler angesteuerte Schaltelement ist dabei für die Energieaufnahme des Aufwärtswandlers aus dem Netz verantwortlich. In gleicher Weise könnte jedoch auch ein Abwärtswandler oder eine vergleichbare Schaltung verwendet werden.

Die Aufgabe wird ferner durch ein Verfahren zum Ansteuern und Betreiben einer Gasentladungslampe gemäß Anspruch 10 gelöst, bei dem auf Basis der Zwischenkreisspannung ein Steuerwert zum Ansteuern der Glättungsschaltung berechnet wird, wobei bei der Berechnung des Steuerwerts Eingangswerte mit Parametern gewichtet werden und in den unterschiedlichen Betriebsphasen der Lampe zur Realisierung unterschiedlicher dynamischer Regeleigenschaften unterschiedliche Parametersätze verwendet werden.

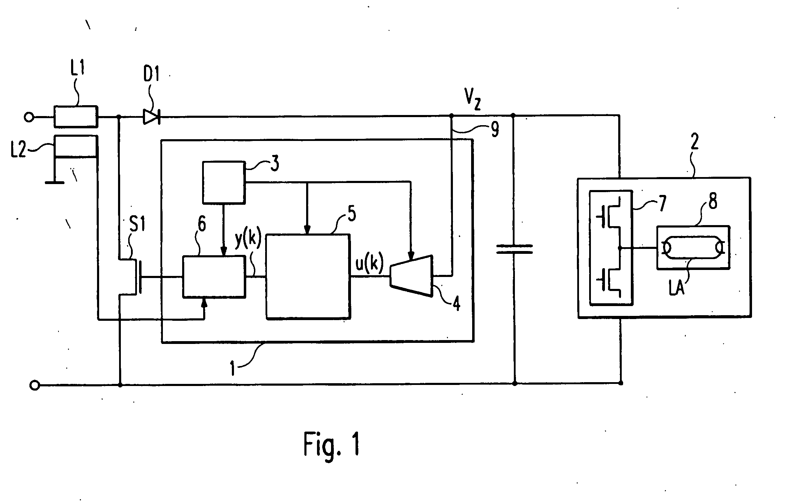

Die Erfindung soll im folgenden anhand der beiliegenden Zeichnung näher erläutert werden, wobei Fig. 1 eine schematische Darstellung des erfindungsgemäßen elektronischen Vorschaltgeräts für eine Leuchtstofflampe mit einem digitalen Zwischenkreisspannungs-Regler zeigt.

Bei der in Fig. 1 gezeigten schematischen Darstellung des erfindungsgemäßen elektronischen Vorschaltgeräts wurde auf die Darstellung der Gleichrichterschaltung, die üblicherweise durch einen Vollbrückengleichrichter gebildet wird, verzichtet. Die gleichgerichtete Netzspannung wird der Glättungsschaltung zugeführt, die im dargestellten Beispiel durch einen Hochsetzsteller gebildet wird, der aus einer Induktivität L1, einer Diode D1, einem Speicherkondensator C1 und einem von dem Zwischenkreispannungs-Regler 1 gesteuerten Schaltelementen in Form eines Feldeffekttransistors S 1 besteht. Die von der Glättungsschaltung bereitgestellte Zwischenkreisspannung Vz wird einem den Wechselrichter 7 sowie den Lastkreis 8 mit der darin angeordneten Gasentladungslampe LA, bei der es sich um eine Leuchtstofflampe handelt, enthaltenden Verbraucherblock 2 zugeführt.

Die Funktionsweise eines Hochsetzstellers ist im Prinzip bereits bekannt und soll daher im folgenden lediglich kurz zusammengefaßt werden. Ist der Feldeffekttransistor S1 leitend, steigt der Strom in der Induktivität L1 linear an. Sperrt hingegen der Feldeffekttransistor S1, entlädt sich der Strom in den Speicherkondensator C1, so daß an diesem eine aus einer Gleichspannung mit Welligkeit bestehende Zwischenkreisspannung Vz entsteht. Durch ein gezieltes Ansteuern des Feldeffekttransistors S1 kann die Energieaufnahme des Aufwärtswandlers und damit auch die an dem Speicherkondensator C1 anliegende Zwischenkreisspannung Vz beeinflußt werden. Dabei besteht die Möglichkeit, die Energieaufnahme durch eine Veränderung der Einschaltzeit oder des Tastverhältnisses des Schalters S1 zu variieren.

Im folgenden soll nun der Zwischenkreisspannungs-Regler 1, der im darstellten Beispiel als digitaler Regler ausgestaltet ist, näher erläutert werden. Über die Eingangsleitung 9 wird zunächst der aktuelle Wert der Zwischenkreisspannung Vz erfaßt. Zur digitalen Weiterverarbeitung wird dieser analoge Wert der Zwischenkreisspannung Vz durch einen Analog-zu-Digital-Umsetzer 4 in einen Digitalwert u(k) umgesetzt. Die Umsetzung erfolgt in jedem Taktzyklus des Zwischenkreisspannungs-Reglers 1, wobei der Takt durch einen zentralen Taktgeber in Form eines Festfrequenzoszillators 3 vorgeben wird. Die Taktsignale des Taktgebers 3 werden außer dem Analog-zu-Digital-Umsetzer 4 auch einer Recheneinheit 5, die das Kernstück des digitalen Zwischenkreisspannungs-Reglers 1 bildet, sowie einem Steuerblock 6 zum Ansteuern des Feldeffekttransistors S1 zugeführt.

Die Recheneinheit 5 dient dazu, in jedem Taktzyklus einen Steuerwert y(k) zu berechnen, der an den Steuerblock 6 übermittelt wird. Dieser setzt den Steuerwert y(k) in ein Signal zum Betreiben des Feldeffekttransistors S1 um und steuert damit dessen Einschaltzeit. Das Durchschalten des Feldeffekttransistors S1 erfolgt dabei zu einem Zeitpunkt, zu dem möglichst kein Strom durch die Diode D1 fließt, da hierdurch die Schaltverluste verringert werden. Hierzu dient eine Detektionswicklung L2, welche induktiv mit der Induktivität L1 des Hochsetzstellers gekoppelt ist. Sperrt der Feldeffekttransistor S1, so fällt der Strom über die Induktivität L1 kontinuierlich ab, bis er zu einem bestimmten Zeitpunkt den Nullpunkt erreicht. Dieser Zeitpunkt wird mit Hilfe der Detektionswicklung L2 von dem Steuerblock L6 erfaßt und der Feldeffektransistor S1 unter Vermeidung von Schaltverlusten wieder durchgeschaltet. Der Steuerwert y(k) gibt dabei vor, wie lange der Feldeffekttransistors S1 leitend geschaltet wird. Durch diese Zeitdauer wird die Leistungsaufnahme des Vorschaltgeräts und damit die Höhe der bereitgestellten Zwischenkreisspannung Vz bestimmt. Es besteht allerdings auch die Möglichkeit, anstelle der Einschaltzeit des Schalters S1 dessen Tastverhältnis in Abhängigkeit von dem aktuellen Steuerwert y(k) zu verändern.

Die Berechnung des Steuerwerts y(k) erfolgt nicht nur anhand des aktuellen Istwerts u(k) der Zwischenkreisspannung Vz, sondern auch anhand der Istwerte sowie der Steuerwerte in den vorherigen Taktzyklen. Aufgrund der digitalen Eigenschaften, wird der Steuerwert y(k) nach einer bestimmten Funktion, im Idealfall nach einer unendlichen Reihe berechnet. Diese unendliche Reihe besteht aus Reihengliedern, die jedoch im vorliegenden Beispiel nach dem dritten Glied abgebrochen werden, um den Aufwand zum Berechnen des Steuerwerts in einem vertretbaren Bereich zu halten. Dies bedeutet, daß der aktuelle Steuerwert y(k) beispielsweise anhand der folgenden Gleichung berechnet wird:

$$y(k) = a1 \cdot y(k\text{-}1) + a2 \cdot y(k\text{-}2) + b1 \cdot u(k) + b2 \cdot u(k\text{-}1) + b3 \cdot u(k\text{-}2)$$

Dabei bezeichnen y(k-1) und y(k-2) die Werte des Steuerwerts in dem vorherigen bzw. dem vorvorherigen Taktzyklus, während die Werte u(k-1) und u(k-2) die Istwerte in dem vorherigen bzw. vorvorherigen Taktzyklus bezeichnen. Diese einzelnen Werte werden mit den Parameter a1, a2 bzw. b1 bis b3 gewichtet.

Wie der oben aufgeführten Gleichung entnommen werden kann, bestimmen die zur Gewichtung der einzelnen Reihenglieder herangezogenen Parameter das dynamische Verhalten des Zwischenkreisspannungs-Reglers 1. Dementsprechend kann durch Verwenden unterschiedlicher Parametersätze für den Steuerblock 6 bei der Berechnung des Steuerwerts y(k) der Zwischenkreisspannungs-Regler 1 an die in den verschiedenen Betriebsphasen der Gasentladungslampe bestehenden Anforderungen angepaßt werden.

So wird beispielsweise während eines Normalbetriebs der Leuchtstofflampe LA, d.h. nach deren Zündung, ein Parametersatz verwendet, der zur Folge hat, daß der Zwischenkreisspannungs-Regler 1 relativ langsam reagiert. In dieser Betriebsphase ist es nämlich lediglich notwendig, daß die dem Wechselrichter 7 und dem Lastkreis 8 zugeführte Leistung innerhalb eines vorgegebenen Leistungsfensters liegt. Gleichzeitig wird hierdurch gewährleistet, daß die durch das Vorschaltgerät erzeugten Oberwellen nur unterhalb eines vorgegebenen Pegels in das Netz zurückstrahlen.

Während der Vorheiz- und der Zündphase der Lampe LA werden hingegen Parametersätze verwendet, welche zur Folge haben, daß der Zwischenkreisspannungs-Regler 1 sehr schnell auf sich verändernde Situationen reagiert, um sicherzustellen, daß in jedem Fall die benötigte Leistung bereitgestellt werden kann. Dies hat zwar zur Folge, daß aufgrund der nunmehr sehr dynamischen Eigenschaften des Zwischenkreisspannungs-Reglers 1 und der Schaltvorgänge des Feldeffekttransistors S1 in erhöhtem Maße Oberwellen am Eingang des Vorschaltgeräts erzeugt werden, allerdings bestehen während der Vorheizphase und der Zündphase einer Gasentladungslampe keine Beschränkungen hinsichtlich der Erzeugung von Oberwellen, weshalb das Hauptaugenmerk auf eine schnelle Zuführung der benötigten Leistung gelegt wird. Demzufolge ist es sinnvoll, in diesen Phasen den Regler besonders schnell zu schalten. Welcher Parametersatz gerade zu verwenden ist, d.h. die Information, in welcher Betriebsphase sich die Lampe LA befindet, wird der Recheneinheit 5 von einer - nicht dargestellten - zentralen Steuerschaltung vorgegeben, die den Ablauf und den Wechsel zwischen den einzelnen Betriebsphasen und damit den gesamten Lampenbetrieb steuert.

Die verschiedenen Parametersätze zur Berechnung des Steuerwerts y(k) werden dabei nicht selbständig in dem Zwischenkreisspannungs-Regler 1 verändert, sondern vorzugsweise bereits während der Entwicklungsphase des elektronischen Vorschaltgeräts festgelegt. Während des Betriebs wird lediglich entsprechend dem aktuellen Zustand der Gasentladungslampe der entsprechende Parametersatz in die Recheneinheit 5 eingelesen.

Das erfindungsgemäße Vorschaltgerät zeichnet sich somit dadurch aus, daß der Zwischenkreisspannungs-Regler 1 in jeder Betriebsphase der Gasentladungslampe optimale Regeleigenschaften aufweist und zum anderen die Bedingungen bzw. Beschränkungen zum Erzeugen von Oberwellen jederzeit erfüllt sind. Die Ausführung des Reglers als Digitalregler bietet dabei die Möglichkeit, den Regler auf sehr einfache Weise in seinen dynamischen Eigenschaften zu verändern. Es bestünde allerdings auch die Möglichkeit, den Regler in analoger Form auszuführen.

**Patentansprüche**

1. Elektronisches Vorschaltgerät für mindestens eine Gasentladungslampe (LA), insbesondere Leuchtstofflampe, mit einer an eine Wechselspannungsquelle anschließbaren Gleichrichterschaltung, einer an den Ausgang der Gleichrichterschaltung angeschlossen und von einer Zwischenkreisspannungs-Reglerschaltung (1) gesteuerten Glättungsschaltung zum Erzeugen einer Zwischenkreisspannung (Vz), sowie einem mit der Zwischenkreisspannung (Vz) gespeisten Wechselrichter (7), an dessen Ausgang ein die Lampe (LA) enthaltender Lastkreis (8) angeschlossen ist, wobei

der Zwischenkreisspannungs-Reglerschaltung (1) die Zwischenkreisspannung zugeführt ist, **dadurch gekennzeichnet**

die Zwischenkreisspannungs-Reglerschaltung (1) derart ausgelegt ist, dass sie in unterschiedlichen Betriebsphasen der Lampe (LA) unterschiedliche dynamische Regeleigenschaften aufweist.

2. Vorschaltgerät nach Anspruch 1,
**dadurch gekennzeichnet,**
**daß** die Zwischenkreisspannungs-Reglerschaltung (1) als Digitalregler ausgestaltet ist, der anhand von digitalisierten Werten der Zwischenkreisspannung (Vz) einen Steuerwert zum Ansteuern der Glättungsschaltung berechnet.

3. Elektronisches Vorschaltgerät nach Anspruch 1 oder 2,
**dadurch gekennzeichnet,**
**dass** die Zwischenkreisspannungs-Reglerschaltung (1) dazu ausgelegt ist, abhängig von einer übermittelten aktuellen Betriebsphase der Lampe (LA) eines von mehreren vorab definierte dynamischen Regelverhalten einzunehmen.

4. Elektronisches Vorschaltgerät nach Anspruch 1 oder 2,
**dadurch gekennzeichnet,**
**daß** die Glättungsschaltung ein die Energieaufnahme des Vorschaltgeräts steuerndes Schaltelement (S1) aufweist, welches von der Zwischenkreisspannungs-Reglerschaltung (1) angesteuert wird.

5. Elektronisches Vorschaltgerät nach Anspruch 4,
**dadurch gekennzeichnet,**
**daß** das Schaltelement ein Feldeffekttransistor (S1) ist.

6. Elektronisches Vorschaltgerät nach Anspruch 4 oder 5,
**dadurch gekennzeichnet,**
**daß** die Zwischenkreisspannungs-Reglerschaltung (1) aufweist:

einen Taktgeber (3) zum Erzeugen von Taktzyklen,
einen Analog-zu-Digital-Umsetzer (4), der in jedem Taktzyklus den aktuellen Wert der Zwischenkreisspannung (Vz) in einen Digitalwert umsetzt,
eine Recheneinheit (5), die in jedem Taktzyklus anhand des aktuellen digitalisierten Werts der Zwischenkreisspannung (Vz), sowie der digitalisierten Werte der Zwischenkreisspannung (Vz) und der Steuerwerte in vorherigen Taktzyklen einen aktuellen Steuerwert berechnet, wobei zur Berechnung die verschiedenen Werte mit den Parametern gewichtet werden, und
einen Steuerblock (6), der das Schaltelement (S1) in Abhängigkeit von dem aktuellen Steuerwert ansteuert.

7. Elektronisches Vorschaltgerät nach Anspruch 6,
**dadurch gekennzeichnet,**
**daß** bei der Berechnung des Steuerwerts neben dem aktuellen digitalisierten Wert der Zwischenkreisspannung (Vz) die Steuerwerte und die digitalisierten Werte der Zwischenkreisspannung (Vz) in den vorherigen Taktzyklen berücksichtigt werden.

8. Elektronisches Vorschaltgerät nach einem der vorherigen Ansprüche,
**dadurch gekennzeichnet,**
**daß** die Glättungsschaltung ein Hochsetzsteller ist.

9. Elektronisches Vorschaltgerät nach einem der vorherigen Ansprüche,
**dadurch gekennzeichnet,**
**daß** die Zwischenkreisspannungs-Reglerschaltung (1) in einem Normalbetrieb des Gasentladungslampe (LA) langsame Regeleigenschaften aufweist.

10. Elektronisches Vorschaltgerät nach Anspruch 9,
**dadurch gekennzeichnet,**
**daß** die Zwischenkreisspannungs-Reglerschaltung (1) in einer Vorheiz- und/oder Zündphase der Gasentladungslampe (LA) schnelle Regeleigenschaften aufweist.

11. Verfahren zum Ansteuern und Betreiben einer Gasentladungslampe (LA), insbesondere einer Leuchtstofflampe, über ein elektronisches Vorschaltgerät mit
einer an eine Wechselspannungsquelle anschließbaren Gleichrichterschaltung, einer an den Ausgang der Gleichrichterschaltung angeschlossen und von einer Zwischenkreisspannungs-Reglerschaltung (1) gesteuerten Glättungsschaltung zum Erzeugen einer Zwischenkreisspannung (Vz),
sowie einem mit der Zwischenkreisspannung (Vz) gespeisten Wechselrichter (7), an dessen Ausgang ein die Lampe (LA) enthaltender Lastkreis (8) angeschlossen ist,
**dadurch gekennzeichnet,**
**daß** auf Basis der Zwischenkreisspannung (Vz) ein Steuerwert zum Ansteuern der Glättungsschaltung berechnet wird, wobei bei der Berechnung des Steuerwerts Eingangswerte mit Parametern gewichtet werden und in den unterschiedlichen Betriebsphasen der Lampe (LA) zur Realisierung unterschiedlicher dynamischer Regeleigenschaften unterschiedliche Parametersätze verwendet werden.

12. Verfahren nach Anspruch 11,
**dadurch gekennzeichnet,**
**daß** bei der Berechnung des Steuerwerts neben dem aktuellen Wert der Zwischenkreisspannung (Vz) auch Steuerwerte und Werte der Zwischenkreisspannung (Vz) zu früheren Zeitpunkten berücksichtigt werden.


**Claims**

1. Electronic ballast for at least one gas discharge lamp (LA), in particular a fluorescent lamp, having a rectifier circuit connectable to an a.c. voltage source, a smoothing circuit, connected to the output of the rectifier circuit and controlled by an intermediate circuit voltage regulation circuit (1), for the generation of an intermediate circuit voltage (Vz), and an inverter (7), fed with the intermediate circuit voltage (Vz), to the output of which inverter a load circuit (8) containing the lamp (LA) is connected, wherein
the intermediate circuit voltage is fed to the intermediate circuit voltage regulation circuit (1),
**characterized in that**,
the intermediate voltage regulation circuit (1) is so configured that in different operational phases of the lamp (LA) it has different dynamic regulation characteristics.

2. Ballast according to claim 1,
**characterized in that**,
the intermediate circuit voltage regulation circuit (1) is constituted as a digital regulator, which on the basis of digitalized values of the intermediate circuit voltage (Vz) calculates a control value for the control of the smoothing circuit.

3. Electronic ballast according to claim 1 or 2,
**characterized in that**,
the intermediate circuit voltage regulation circuit (1) is configured to assume one of a plurality of previously defined dynamic regulation patterns in dependence upon a notified current operational phase of the lamp (LA).

4. Electronic ballast according to claim 1 or 2,
**characterized in that**,
the smoothing circuit has a switching element (S1) controlling the energy take-up of the ballast, which switching element is controlled by the intermediate circuit voltage regulation circuit (1).

5. Electronic ballast according to claim 4,
**characterized in that**,
the switching element is a field effect transistor (S1).

6. Electronic ballast according to claim 4 or 5,
**characterized in that**,
the intermediate circuit voltage regulation circuit (1) has:

   a clock (3) for the generation of clock cycles,
   an analog-to-digital converter (4), which in each clock cycle converts the current value of the intermediate circuit voltage (Vz) into a digital value,

a computing unit (5) which, in each clock cycle, on the basis of the current digitalized value of the intermediate circuit voltage (Vz), and the digitalized values of the intermediate circuit voltage (Vz) and the control values in preceding clock cycles, calculates a current control value, wherein for calculation the various values are weighted with the parameters, and
a control block (6), which controls the switching element (S1) in dependence upon the current control value.

7. Electronic ballast according to claim 6,
**characterized in that**,
in the calculation of the control value, along with the current digitalized value of the intermediate circuit voltage (Vz), the control values and the digitalized values of the intermediate circuit voltage (Vz) in the preceding clock cycles are taken into account.

8. Electronic ballast according to any preceding claim,
**characterized in that**,
the smoothing circuit is an up-converter.

9. Electronic ballast according to any preceding claim,
**characterized in that**,
the intermediate circuit voltage regulation circuit (1) has, in a normal operation of the gas discharge lamp (LA), slow regulation characteristics.

10. Electronic ballast according to claim 9,
**characterized in that**,
in a pre-heating and/or ignition phase of the gas discharge lamp (LA), the intermediate circuit voltage regulation circuit (1) has fast regulation characteristics.

11. Method for the control and operation of a gas discharge lamp (LA), in particular a fluorescent lamp, via an electronic ballast having a rectifier circuit connectable to an a.c. voltage source, a smoothing circuit, for the generation of an intermediate circuit voltage (Vz), connected to the output of the rectifier circuit and controlled by an intermediate circuit voltage regulation circuit (1),
and an inverter (7), fed with the intermediate circuit voltage (Vz), to the output of which a load circuit (8) containing the lamp (LA) is connected,
**characterized in that**,
on the basis of the intermediate circuit voltage (Vz) there is calculated a control value for the control of the smoothing circuit, wherein in calculation of the control value, input values are weighted with parameters, and in the different operational phases of the lamp (LA), different parameter sets are employed for the realization of different dynamic regulation characteristics.

12. Method according to claim 11,
**characterized in that**,
in the calculation of the control value, along with the current value of the intermediate circuit voltage (Vz), also control values and values of the intermediate circuit voltage (Vz) at earlier time points are taken into account.

**Revendications**

1. Ballast électronique pour au moins une lampe à décharge gazeuse (LA), en particulier un tube fluorescent, avec un circuit redresseur pouvant être raccordé à une source de tension alternative, un circuit de lissage raccordé à la sortie du circuit redresseur et commandé par un circuit régulateur à tension de circuit intermédiaire (1) pour générer une tension de circuit intermédiaire (Vz), ainsi qu'un onduleur (7) alimenté par la tension de circuit intermédiaire (Vz), à la sortie duquel est raccordé un circuit de charge (8) contenant la lampe (LA),
la tension de circuit intermédiaire étant amenée, au circuit régulateur à tension de circuit intermédiaire (1),
**caractérisé en ce que**
le circuit de réglage à tension de circuit intermédiaire (1) est conçu de telle sorte qu'il présente différentes propriétés de réglage dynamiques dans différentes phases de fonctionnement de la lampe (LA).

2. Ballast selon la revendication 1,
**caractérisé en ce que**

le circuit régulateur à tension de circuit intermédiaire (1) est conçu comme un régulateur numérique qui calcule à l'aide de valeurs numérisées de la tension de circuit intermédiaire (Vz) une valeur de commande pour l'activation du circuit de lissage.

3. Ballast électronique selon la revendication 1 ou 2,
   **caractérisé en ce que**
   le circuit régulateur à tension de circuit intermédiaire (1) est conçu pour adopter en fonction d'une phase de fonctionnement actuelle transmise de la lampe (LA) l'un de plusieurs comportements de réglage dynamiques prédéfinis auparavant.

4. Ballast électronique selon la revendication 1 ou 2,
   **caractérisé en ce que**
   le circuit de lissage présente un élément de commutation (S1) commandant la consommation d'énergie du ballast, qui est piloté par le circuit régulateur à tension de circuit intermédiaire (1).

5. Ballast électronique selon la revendication 4,
   **caractérisé en ce que**
   l'élément de commutation est un transistor à effet de champ (S1).

6. Ballast électronique selon la revendication 4 ou 5,
   **caractérisé en ce que**
   le circuit régulateur à tension de circuit intermédiaire (1) présente :

   un générateur de rythme (3) pour générer des cycles de rythme,
   un convertisseur analogique-numérique (4), qui convertit dans chaque cycle de rythme la valeur actuelle de la tension de circuit intermédiaire (Vz) en une valeur numérique,
   une unité de calcul (5), qui calcule une valeur de commande actuelle dans chaque cycle de rythme à l'aide de la valeur numérisée actuelle de la tension de circuit intermédiaire (Vz) et des valeurs numérisées de la tension de circuit intermédiaire (Vz) et des valeurs de commande dans des cycles de rythme antérieurs, les différentes valeurs étant pondérées avec les paramètres pour le calcul, et
   un bloc de commande (6), qui pilote l'élément de commutation (S1) en fonction de la valeur de commande actuelle.

7. Ballast électronique selon la revendication 6,
   **caractérisé en ce que**,
   lors du calcul de la valeur de commande, parallèlement à la valeur numérisée actuelle de la tension de circuit intermédiaire (Vz), les valeurs de commande et les valeurs numérisées de la tension de circuit intermédiaire (Vz) dans les cycles de rythme antérieurs sont prises en compte.

8. Ballast électronique selon l'une des revendications précédentes,
   **caractérisé en ce que**
   le circuit de lissage est un régulateur de haut niveau.

9. Ballast électronique selon l'une des revendications précédentes,
   **caractérisé en ce que**
   le circuit régulateur à tension de circuit intermédiaire (1) présente des propriétés de réglage lentes lors d'un fonctionnement normal de la lampe à décharge gazeuse (LA).

10. Ballast électronique selon la revendication 9,
    **caractérisé en ce que**,
    le circuit régulateur à tension de circuit intermédiaire (1) présente des propriétés de réglage rapides dans une phase de préchauffage et/ou d'allumage de la lampe à décharge gazeuse (LA).

11. Procédé pour le pilotage et l'exploitation d'une lampe à décharge gazeuse (LA), en particulier d'un tube fluorescent, au moyen d'un ballast électronique avec un circuit redresseur pouvant être raccordé à une source de tension alternative, un circuit de lissage raccordé à la sortie du circuit redresseur et commandé par un circuit régulateur à tension de circuit intermédiaire (1) pour générer une tension de circuit intermédiaire (Vz), et un onduleur (7) alimenté par la tension de circuit intermédiaire (Vz), à la sortie duquel est raccordé un circuit de charge (8) contenant la lampe (LA),
**caractérisé en ce que**,
sur la base de la tension de circuit intermédiaire (Vz), on calcule une valeur de commande pour le pilotage du circuit de lissage, des valeurs d'entrée étant pondérées avec des paramètres lors du calcul de la valeur de commande et différents ensembles de paramètres étant utilisés dans les différentes phases de fonctionnement de la lampe (LA) pour réaliser différentes propriétés de réglage dynamiques.

12. Procédé selon la revendication 11,
**caractérisé en ce que**,
lors du calcul de la valeur de commande, parallèlement à la valeur actuelle de la tension de circuit intermédiaire (Vz), on prend en compte également des valeurs de commande et des valeurs de la tension de circuit intermédiaire (Vz) à des instants antérieurs.

Fig. 1